# EUROPÄISCHE PATENTSCHRIFT

(11) **EP 1 910 127 B1**
(45) Veröffentlichungstag und Bekanntmachung des Hinweises auf die Patenterteilung: **30.09.2009**
(21) Anmeldenummer: 06776590.9
(22) Anmeldetag: 03.08.2006
(51) Int. Cl.: B60N 2/66

(54) **LORDOSENSTÜTZE**
LORDOSIS SUPPORT
SOUTIEN LOMBAIRE

(30) Priorität: 04.08.2005 DE 102005036774
(43) Veröffentlichungstag der Anmeldung: 16.04.2008
(73) Patentinhaber: Schukra Gerätebau AG, 2560 Berndorf (AT)
(72) Erfinder: STÖSSEL, Veit, 90409 Nürnberg (DE); HAGEN, Werner, 91469 Hagenbüchach-Bräuersdorf (DE)
(74) Vertreter: Banzer, Hans-Jörg
(86) Internationale Anmeldenummer: PCT/EP2006/007696
(87) Internationale Veröffentlichungsnummer: WO 2007/014781

(56) Entgegenhaltungen:
- EP-A1- 0 518 830
- EP-B1- 0 915 773

## Beschreibung

Die vorliegende Erfindung betrifft eine Lordosenstütze für eine Sitzlehne gemäß dem Oberbegriff des Anspruchs 1 bzw. demjenigen des Anspruchs 2. Eine derartige Lordosenstütze ist aus der EP-B1-0 915 773 bekannt. Die Erfindung betrifft insbesondere eine Lordosenstütze, wie sie in Rücklehnen von Kraftfahrzeugsitzen, Büromöbelsitzen, oder Wohnmöbelsitzen eingebaut ist.

Lordosenstützen werden in Sitzlehnen eingebaut, um durch Bildung einer entsprechenden Auflagefläche eine ausreichende Unterstützung im Lendenwirbel- oder Lordosenbereich einer auf dem Sitz sitzenden Person bereitzustellen. Hierfür weist die Lordosenstütze üblicherweise einen Lordosenstützkorb auf, der an einem Rahmen befestigt ist, der in der Sitzlehne angeordnet ist. Weiterhin ist üblicherweise eine Zugvorrichtung vorgesehen, mit der die Position des Lordosenstützkorbs relativ zum Rahmen verändert werden kann.

Im Stand der Technik ist ein Lordosenstützkorb bekannt, der an einer Seite am Rahmen befestigt ist, wobei die andere Seite über einen Bowdenzug an der anderen Rahmenseite befestigt ist, wobei bei Zug am Bowdenzug die Lage des Stützkorbes relativ zu der Ebene, die durch den Rahmen aufgespannt ist, verändert wird. Durch die einseitige Zugbelastung ergibt sich eine asymmetrische Wirkung der Zugbelastung, so dass der Lordosenstützkorb bei Zug am Bowdenzug auch seitlich bewegt wird, und nicht nur senkrecht zu der Ebene bewegt wird, die durch den Rahmen aufgespannt. Weiterhin erfolgt die Bewegung nicht symmetrisch zu der Achse, die senkrecht auf die Ebene steht, die durch den Rahmen aufgespannt wird, so dass bei Zug am Bowdenzug die auf dem Sitz sitzende Person eine unsymmetrische Entlastung des Lordosenbereichs spürt. Weiterhin war für eine relativ kleine Bewegung des Lordosenstützkorbs eine relativ große Zuglänge notwendig.

Es ist eine Aufgabe der vorliegenden Erfindung eine Lordosenstütze bereitzustellen, die eine symmetrische Bewegung des Lordosenstützkorbs ermöglicht, wobei bei geringer Zugbewegung eine möglichst große Verstellung des Lordosenstützkorbs erreicht werden soll.

Diese Aufgabe wird durch die unabhängigen Ansprüche erfindungsgemäß gelöst. In den abhängigen Ansprüchen sind bevorzugte Ausführungsformen der Erfindung beschrieben. Erfindungsgemäß weist die Lordosenstütze für eine Sitzlehne einen Lordosenstützkorb auf, der in einem Rahmen einer Sitzlehne angeordnet ist. Weiterhin ist eine Zugvorrichtung vorgesehen, die die Position des Lordosenstützkorbs relativ zum Rahmen verändert. Die Zugvorrichtung weist zwei Zugkabel auf, die so mit dem Lordosenstützkorb und dem Rahmen gekoppelt sind, dass bei Zug an der Zugvorrichtung der Lordosenstützkorb relativ zu der Ebene, die durch den Rahmen der Sitzlehne aufgespannt wird, bewegt wird. Durch die beiden Zugkabel der Zugvorrichtung wird ein symmetrischer Zug an dem Lordosenstützkorb erreicht, so dass eine symmetrische Bewegung des Lordosenstützkorbs zu einer Achse erreicht wird, die senkrecht zu der Ebene steht, die durch den Rahmen der Sitzlehne aufgespannt wird. Ebenso wird durch die beiden Zugkabel bei gleicher Zuglänge der doppelte Verstellweg gegenüber dem Stand der Technik erreicht, bei dem der Lordosenstützkorb nur mit einem Zugkabel ausgestattet ist.

Dabei weist der Lordosenstützkorb eine Führungsvorrichtung auf, in der die Zugvorrichtung beweglich geführt wird. Gemäß einer bevorzugten Ausführungsform liegen die beiden Zugkabel beweglich in der Führungsvorrichtung. Vorzugsweise ist die Zugvorrichtung ein Bowdenzug, wobei der Aktuator zur Betätigung des Bowdenzugs an dem Rahmen angebracht ist.

Gemäß einer weiteren bevorzugten Ausführungsform sind beide Zugkabel an ihrem einem Ende am Rahmen befestigt. In dieser Ausführungsform sind die jeweiligen anderen Enden der Zugkabel an dem Aktuator befestigt. Die Zugkabel können in einer Ausführungsform zusammen vom Aktuator bis zu der Führungsvorrichtung verlaufen, wobei sie sich bei der Führungsvorrichtung verzweigen, und wobei jedes Zugkabel von der Verzweigung bis zum Rahmen läuft, wo es befestigt ist.

Weiterhin vorzugsweise verlaufen die Zugkabel bei der Verzweigung an der Führungsvorrichtung in entgegengesetzte Richtung und werden an gegenüberliegenden Seiten des Rahmens befestigt. Diese beiden seitlichen Teile der Zugkabel von der Verzweigung bis zum Rahmen sind für die Position des Lordosenstützkorbs relativ zum Rahmen verantwortlich.

Bei Zug an den Zugkabeln kann der Bereich der Zugkabel von der Befestigung am Rahmen zur Führungsvorrichtung verkürzt werden, wodurch der Lordosenstützkorb relativ zu der durch den Rahmen aufgespannten Ebene verschoben wird. In diesem Fall verlängert sich der Bereich, in dem die beiden Zugkabel gemeinsam bis zur Führungsvorrichtung verlaufen. Der Bereich des einen Zugkabels von der Führungsvorrichtung zum seitlichen Rahmen wird verkürzt, wobei dieser Bereich ebenso für das andere Zugkabel von der Führungsvorrichtung zur anderen Rahmenseite ebenso verkürzt wird, wodurch bei vorgegebener Zuglänge sich der Verstellweg des Lordosenstützkorbs verdoppelt.

Gemäß einer anderen Ausführungsform sind die beiden Zugkabel so angeordnet, dass das zweite Zugkabel vom Aktuator bis zur Führungsvorrichtung verläuft. Das erste Zugkabel verläuft von der einen Rahmenseite über die Führungsvorrichtung zur anderen Rahmenseite und ist derart mit dem zweiten Zugkabel gekoppelt, dass bei Zug am zweiten Zugkabel die effektive Kabellänge des ersten Zugkabels zwischen den beiden Rahmenseiten verkürzt wird. Hierbei wird bei Zug am zweiten Zugkabel ein Teilbereich des ersten Zugkabels in Richtung des zweiten Zugkabels senkrecht zum Verlauf des ersten Zugkabels bewegt, so dass sich die effektive Kabellänge des ersten Zugkabels von der ersten Rahmenseite zur zweiten Rahmenseite verkürzt.

Nachfolgend wird die Erfindung anhand eines Ausführungsbeispiels unter Bezugnahme auf die beiliegenden schematischen Zeichnungen näher erläutert. Hierbei zeigen:
Figur 1 eine Vorderansicht der erfindungsgemäßen Lordosenstütze, die im Rahmen einer Sitzlehne angeordnet ist,
Figur 2 eine Rückansicht der Lordosenstütze im Rahmen,
Figur 3 eine Draufsicht auf die Lordosenstütze in einer entlasteten Position,
Figur 4 eine Draufsicht auf die Lordosenstütze in einer belasteten Position,
Figur 5 eine vergrößerte Ansicht der Lordosenstütz in einer Vorderansicht,
Figur 6 eine vergrößerte Rückansicht der Lordosenstütze,
Figur 7 eine Detailansicht der Führungsvorrichtung bei entlasteter Position des Bowdenzugs, und
Figur 8 eine Detailansicht der Führungsvorrichtung bei belasteter Position des Bowdenzugs.

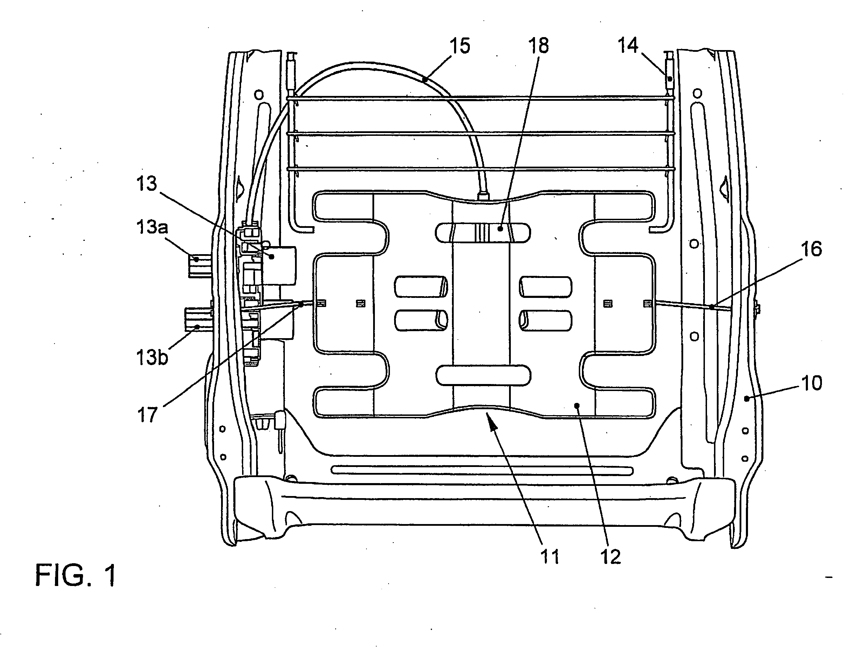

Figur 1 zeigt eine Vorderansicht eines Rahmens 10, der Teil einer nicht dargestellten Sitzlehne eines Kraftfahrzeugsitzes ist. Weiterhin ist im unteren Bereich des Sitzrahmens eine Lordosenstütze 11 mit einer Lordosenstützkorb 12 vorgesehen. Der Lordosenstützkorb wird über einen Bowdenzug betätigt, wobei zur Betätigung des Bowdenzugs ein Aktuator 13 vorgesehen ist, der an der einen Seite des Rahmens 10 befestigt ist. Bei der in Figur 1 dargestellten Ausführungsform sind zwei verschiedene Positionen des Aktuators 13 dargestellt, der Aktuator 13a und der Aktuator 13b. Die beiden Aktuatoren 13a und 13b zeigen nur verschiedene mögliche Anordnungen eines einzigen Aktuators im Lehnenrahmen, das Bereitstellen von zwei Aktuatoren ist nicht vorgesehen. Oberhalb des Lordosenstützkorbs 12 ist eine Drahtmatte 14 vorgesehen, die beispielsweise über nicht dargestellte Federn mit dem Rahmen 10 verbunden sein kann. Ebenso kann die Drahtmatte 14 mit dem Lordosenstützkorb 12 verbunden sein. Eine Verbindung zwischen Lordosenstützkorb 12 und Drahtmatte 14 ist jedoch nicht zwingend notwendig.

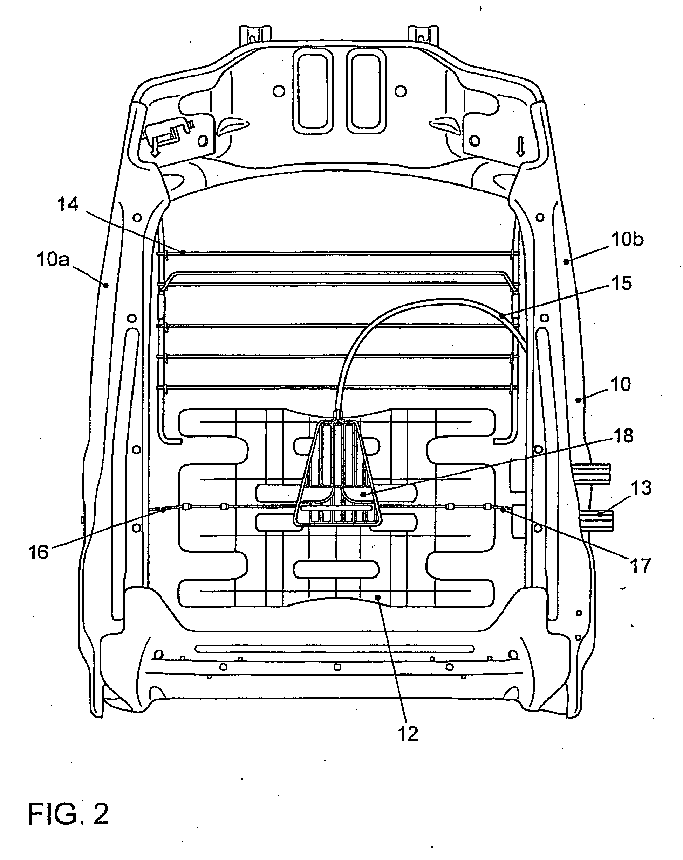

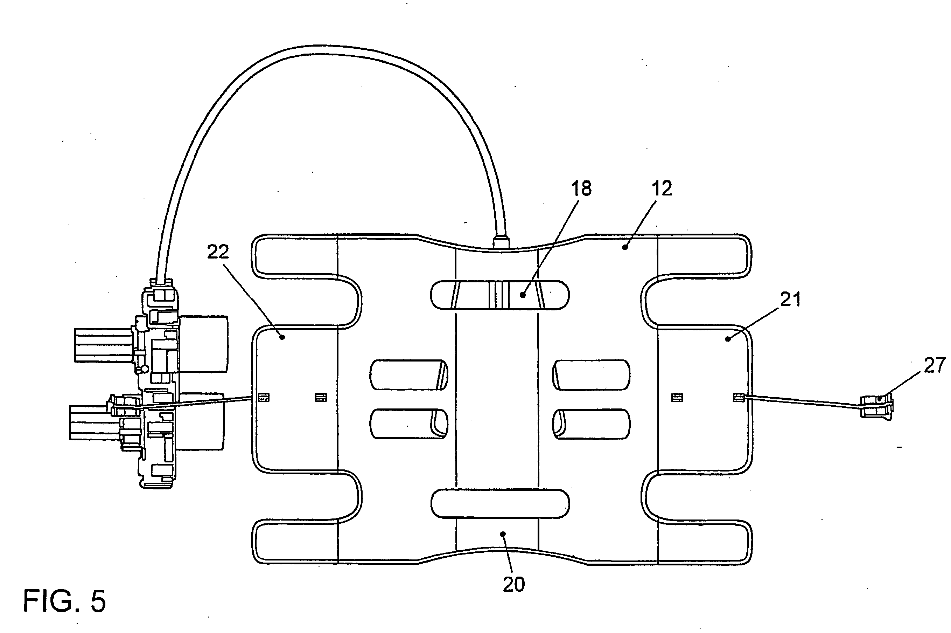

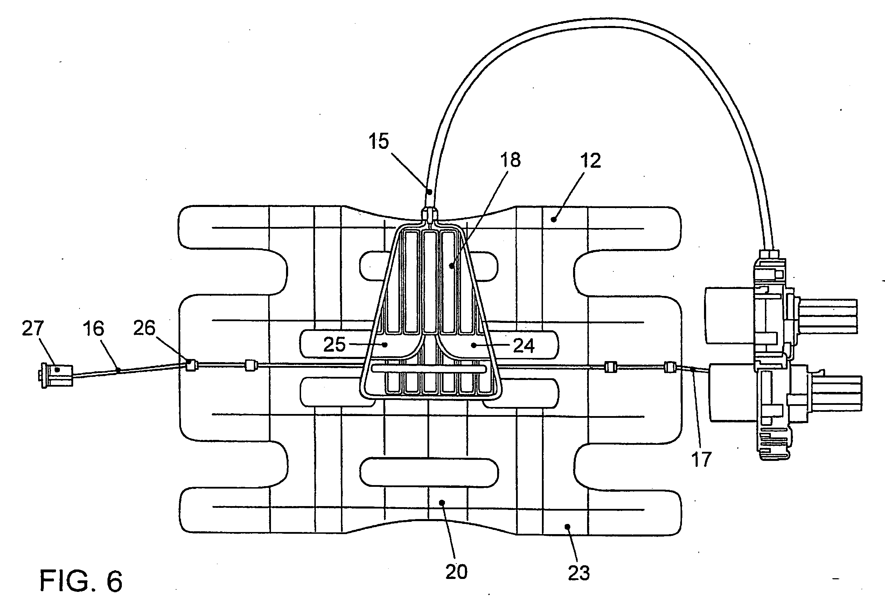

Wie unter anderen auch in Figur 2 zu erkennen ist, werden in einer Kabelhülse 15 zwei Zugkabel 16 und 17 des Bowdenzugs geführt. Diese beiden Zugkabel verlaufen ausgehend vom Aktuator 13 gemeinsam in der Kabelhülse 15 bis zu einer Führungsvorrichtung 18, bei der sie sich verzweigen, wobei das eine Zugkabel 16 an der einen Seite 10a des Rahmens 10 befestigt ist, wobei das Zugkabel 17 bei der Führungsvorrichtung abzweigt, zur anderen Seite des Rahmens 10 läuft und dort befestigt ist. Der Lordosenstützkorb ist, wie unter anderem in Figuren 5 und 6 zu erkennen ist plattenförmig ausgebildet und ist zur Führung des unteren Lendenbereichs leicht konkav gekrümmt. Der Lordosenstützkorb weist einen mittleren Abschnitt 20 auf, an dem die Führungsvorrichtung 18 angebracht ist. Weiterhin sind zwei seitliche Abschnitte 21 und 22 vorgesehen. An der Seite des Lordosenstützkorbs, die vom Rücken der Person abgewandt ist, die an der Sitzlehne angelehnt ist, sind Verstrebungen 23 vorgesehen.

Wie in den Figuren 2 und 6 zu erkennen ist, ist die Kabelhülse 15 an der Führungsvorrichtung 18 angebracht. Die Führungsvorrichtung 18 weist zwei bogenförmige Führungsabschnitte 24 und 25 auf, die die Umlenkung der beiden Zugkabel 16 und 17 bewirken. Die beiden Zugkabel 16 und 17 sind beweglich in der Führungsvorrichtung angeordnet und werden bei den Umlenkungen 24 und 25 um ca. 90° im Wesentlichen in entgegengesetzte Richtungen umgelenkt, werden am Lordosenstützkorb in Führungsösen 26 geführt, bevor sie mit Fixierelementen 27 am Rahmen 10 befestigt werden.

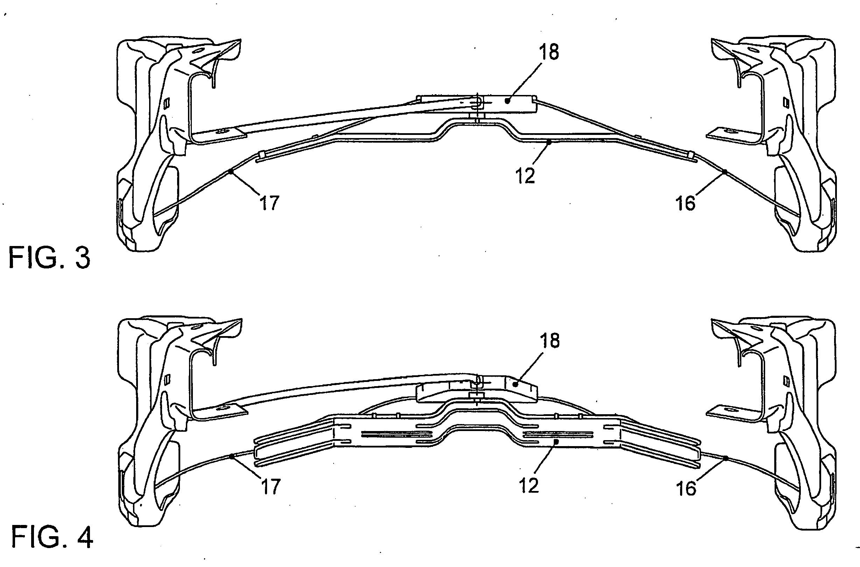

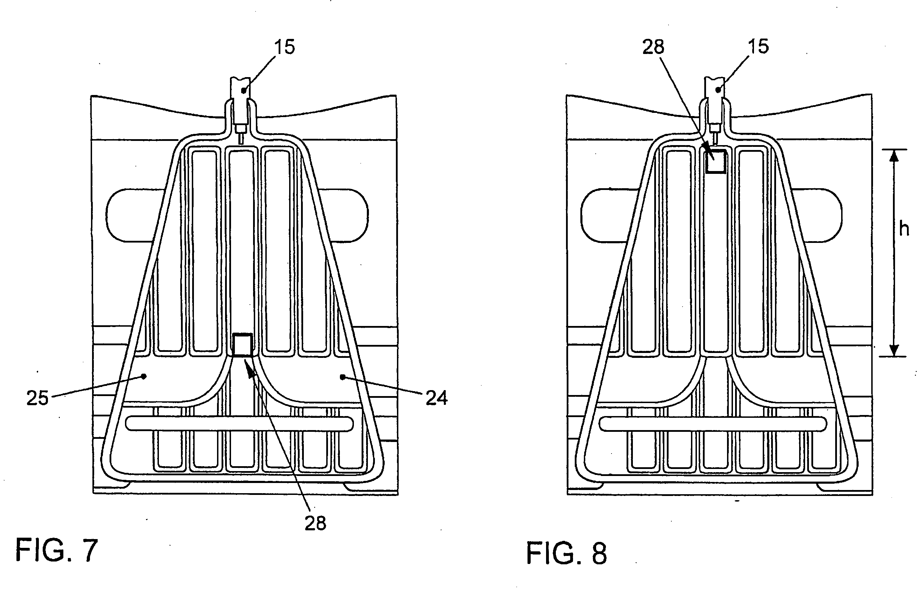

In den Figuren 3 und 4 sind die verschiedenen Positionen des Lordosenstützkorbs relativ zu dem Rahmen abgebildet. In der in der Figur 3 dargestellten Position wird kein Zug auf die Zugkabel 16 und 17 ausgeübt, der Lordosenstützkorb liegt in einer Ruheposition, wobei er durch nicht dargestellte Polsterungen des Sitzes in die in Figur 3 dargestellte Lage gedrückt wird. Bei dieser Position von Figur 3 verlaufen die beiden Kabel, wie in Figur 7 dargestellt, bis zu einem Verbindungsnippel 28, der die beiden Zugkabel 16 und 17 verbindet, zusammen bevor sie durch die Umlenkungen zu den Seiten des Rahmens geführt werden. Wenn nun der Aktuator 13 betätigt wird, wird Zug auf die beiden Zugkabel 16 und 17 ausgeübt, wobei der Verbindungsnippel und der gemeinsam verlaufende Bereich der Zugkabel, wie in Figur 8 dargestellt, in Richtung der Kabelhülse 15 bewegt wird. Hierdurch wird der Bereich der Zugkabel 16 und 17, der vorher durch die Umlenkungen 24 und 25 umgelenkt horizontal verlaufen ist, jeweils um die Höhe h verkürzt. Insgesamt wird der Bereich der Zugkabel, der zwischen den beiden Seiten 10a und 10b des Rahmens 10 horizontal verläuft, um die Höhe 2h verkürzt. Insgesamt verkürzt sich damit die effektive horizontale Zugkabellänge um die Höhe 2h. Diese horizontale Zugkabellänge ist für die Lage des Lordosenstützkorbs 12 relativ zu der Ebene, die durch den Rahmen aufgespannt wird, verantwortlich. Dadurch wird der Lordosenstützkorb, wie in Figur 4 dargestellt, in Richtung des nicht dargestellten Rückens gedrückt.

Für den Fachmann ergibt sich damit aus der vorgehenden Beschreibung durch die Erfindung folgender Vorteil.

Erstens wird der Lordosenstützkorb symmetrisch senkrecht zu der Ebene, die durch den Rahmen aufgespannt wird, bewegt. Weiterhin wird durch eine Zuglänge h am Aktuator eine Verstellung des Lordosenstützkorbs um die Länge 2h erreicht. Der Aktuator zur Betätigung des Zugkabels kann entweder manuell oder durch einen Elektromotor betätigt werden.

Anstatt der in den Figuren dargestellten beiden Zugkabel 16 und 17 kann auch ein erstes Zugkabel vorgesehen sein, das von der einen Seite 10a des Rahmens zur anderen Seite 10b verläuft, wobei ein zweites Zugkabel vorgesehen ist, das vom Aktuator bis zum Verbindungsnippel 28 verläuft. Am Verbindungsnippel 28 ist dann das erste Zugkabel mit dem zweiten Zugkabel verbunden. Bei Zug an dem zweiten Zugkabel, das am Aktuator befestigt ist, hebt dieses Zugkabel das andere Zugkabel in Richtung der Kabelhülse 15, so dass wiederum der Lordosenstützkorb in die Figur 4 dargestellte Position bewegt wird, da die Länge des Zugkabels, das zwischen den beiden Seiten des Rahmens gespannt ist, um die Länge 2h verkürzt wird.

### BEZUGSZEICHENLISTE

- 10: Rahmen
- 10a: Seite
- 10b: Seite
- 11: Lordosenstütze
- 12: Lordosenstützkorb
- 13: Aktuator
- 14: Drahtmatte
- 15: Kabelhülse
- 16, 17: Zugkabel
- 18: Führungsvorrichtung
- 20: mittlerer Abschnitt
- 21, 22: seitliche Abschnitte
- 23: Verstrebung
- 24, 25: Umlenkung
- 26: Führungsösen
- 27: Fixierelemente
- 28: Verbindungsnippel

## Patentansprüche

1. Lordosenstütze für eine Sitzlehne mit
- einem Lordosenstützkorb (12), der in einem Rahmen (10) einer Sitzlehne angeordnet ist,
- einer Zugvorrichtung in Form eines Bowdenzugs, wobei der Aktuator (13) des Bowdenzugs am Rahmen (10) angebracht ist, wobei die Zugvorrichtung die Position des Lordosenstützkorbs (12) relativ zum Rahmen verändert und zwei Zugkabel (16, 17) aufweist, die mit dem Lordosenstützkorb (12) und dem Rahmen so gekoppelt sind, dass bei Zug an der Zugvorrichtung der Lordosenstützkorb (12) relativ zu der Ebene, die durch den Rahmen (10) der Sitzlehne aufgespannt wird, bewegt wird,
**dadurch gekennzeichnet, dass** das erste Zugkabel von der einen Rahmenseite zur anderen Rahmenseite verläuft, und das zweite Zugkabel vom Aktuator bis zu einer am Lordosenstützkorb angebrachten Führungsvorrichtung verläuft, in der die Zugkabel beweglich verlaufen, wobei die beiden Zugkabel bei der Führungsvorrichtung so miteinander gekoppelt sind, dass bei Zug am zweiten Zugkabel effektiv die Kabellänge des ersten Zugkabels zwischen den beiden Rahmenseiten verkürzt wird.

2. Lordosenstütze für eine Sitzlehne mit
- einem Lordosenstützkorb (12), der in einem Rahmen (10) einer Sitzlehne angeordnet ist,
- einer Zugvorrichtung, die die Position des Lordosenstützkorbs (12) relativ zum Rahmen verändert und zwei Zugkabel (16, 17) aufweist, die mit dem Lordosenstützkorb (12) und dem Rahmen so gekoppelt sind, dass bei Zug an der Zugvorrichtung der Lordosenstützkorb (12) relativ zu der Ebene, die durch den Rahmen (10) der Sitzlehne aufgespannt wird, bewegt wird, wobei die Zugvorrichtung ein Bowdenzug ist, wobei der Aktuator (13) des Bowdenzugs am Rahmen (10) angebracht ist,
**dadurch gekennzeichnet, dass** die Zugkabel (16, 17) vom Aktuator (13) bis zu einer am Lordosenstützkorb angebrachten Führungsvorrichtung (18), in der die Zugkabel beweglich geführt werden, zusammen verlaufen und sich bei der Führungsvorrichtung verzweigen, wobei jedes Zugkabel von der Verzweigung bis zum Rahmen läuft, an dem es befestigt ist.

3. Lordosenstütze nach Anspruch 2, **dadurch gekennzeichnet, dass** beide Zugkabel mit einem ihrer Enden am Rahmen befestigt sind.

4. Lordosenstütze nach Anspruch 2 oder 3, wobei die Zugkabel bei der Verzweigung in entgegengesetzte Richtung umgelenkt werden und an gegenüberliegenden Seiten des Rahmens (10) befestigt sind.

5. Lordosenstütze nach einem der Ansprüche 2 bis 4, **dadurch gekennzeichnet, dass** bei Zug an der Zugvorrichtung die Bereiche des Zugkabels von der Befestigung am Rahmen zur Führungsvorrichtung (18) verkürzt werden, wodurch der Lordosenstützkorb relativ zu der durch den Rahmen aufgespannten Ebene verschoben wird.

## Claims

1. Lumbar support for a seat backrest, having
- a lumbar support basket (12) arranged in a frame (10) of a seat backrest,
- a pulling device in the form of a Bowden cable, the actuator (13) of the Bowden cable being attached to the frame (10), wherein the pulling device changes the position of the lumbar support basket (12) relative to the frame and has two pull cables (16, 17) which are coupled to the lumbar support basket (12) and the frame in such a way that, when tension is exerted on the pulling device, the lumbar support basket (12) is moved relative to the plane defined by the frame (10) of the seat backrest,
**characterised in that** the first pull cable runs from one frame side to the other frame side, and the second pull cable runs from the actuator up to a guiding device attached to the lumbar support basket, in which the pull cables are movably guided, the two pull cables being coupled to each other at the guiding device in such a way that, when tension is exerted on the second pull cable, the cable length of the first pull cable between the two frame sides is effectively shortened.

2. Lumbar support for a seat backrest, having
- a lumbar support basket (12) arranged in a frame (10) of a seat backrest,
- a pulling device which changes the position of the lumbar support basket (12) relative to the frame and which has two pull cables (16, 17) which are coupled to the lumbar support basket (12) and the frame in such a way that, when tension is exerted on the pulling device, the lumbar support basket (12) is moved relative to the plane defined by the frame (10) of the seat backrest, wherein the pulling device is a Bowden cable, the actuator (13) of the Bowden cable being attached to the frame (10),
**characterised in that** the pull cables (16, 17) are running from the actuator (13) together up to a guiding device (18) attached to the lumbar support basket, in which the pull cables are movably guided, and are branching at the guiding device, each pull cable running from the branching up to the frame to which it is fastened.

3. Lumbar support according to claim 2, **characterised in that** both pull cables are fastened by one of their ends to the frame.

4. Lumbar support according to claim 2 or 3, wherein the pull cables are diverted in opposite directions at the branching up and are fastened to opposite sides of the frame (10).

5. Lumbar support according to any one of claims 2 to 4, **characterised in that**, when tension is exerted on the pulling device, the regions of the pull cable from the fastening to the frame up to the guiding device (18) are shortened, whereby the lumbar support basket is displaced relative to the plane defined by the frame.

## Revendications

1. Support lombaire pour un dossier, comportant
- une coque de support lombaire (12), qui est disposée dans un bâti (10) d'un dossier,
- un dispositif de traction sous la forme d'une commande par câble, l'actionneur (13) de la commande par câble étant attaché au bâti (10), le dispositif de traction modifiant la position de la coque de support lombaire (12) par rapport au bâti et comportant deux câbles de traction (16, 17), qui sont couplés à la coque de support lombaire (12) et au bâti de telle sorte que, en cas de traction sur le dispositif de traction, la coque de support lombaire (12) est déplacée par rapport au plan déployé par le bâti (10) du dossier,
**caractérisé en ce que** le premier câble de traction s'étend depuis un côté du bâti vers l'autre côté du bâti, et le deuxième câble de traction s'étend depuis l'actionneur jusque vers un dispositif de guidage, qui est attaché à la coque de support lombaire et dans lequel les câbles de traction sont logés de manière mobile, les deux câbles de traction étant couplés l'un à l'autre dans le dispositif de guidage, de telle sorte que, lors d'une traction exercée sur le deuxième câble de traction, la longueur du premier câble de traction entre les deux côtés du bâti est effectivement diminuée.

2. Support lombaire pour un dossier, comportant
- une coque de support lombaire (12), qui est disposée dans un bâti (10) d'un dossier,
- un dispositif de traction qui modifie la position de la coque de support lombaire (12) par rapport au bâti et comporte deux câbles de traction (16, 17), qui sont couplés à la coque de support lombaire (12) et au bâti de telle sorte que, en cas de traction sur le dispositif de traction, la coque de support lombaire (12) est déplacée par rapport au plan déployé par le bâti (10) du dossier, ledit dispositif de traction étant une commande par câble, l'actionneur de la commande par câble étant attaché au bâti (10),
**caractérisé en ce que** les câbles de traction (16, 17) s'étendent conjointement depuis l'actionneur (13) jusque vers un dispositif de guidage (18), qui est attaché à la coque de support lombaire et dans lequel les câbles de traction sont logés de manière mobile, et forment une dérivation au niveau du dispositif de guidage, chaque câble de traction s'étendant depuis la dérivation jusqu'au bâti auquel il est fixé.

3. Support lombaire selon la revendication 2, **caractérisé en ce que** les deux câbles de traction sont fixés au bâti par l'une de leurs extrémités.

4. Support lombaire selon la revendication 2 ou 3, dans lequel les câbles de traction sont renvoyés en sens inverse au niveau de la dérivation et sont fixés sur des côtés opposés du bâti (10).

5. Support lombaire selon l'une quelconque des revendications 2 à 4, **caractérisé en ce que**, en cas de traction sur le dispositif de traction, les zones du câble de traction depuis la fixation du bâti jusqu'au dispositif de guidage (18) sont raccourcies, moyennant quoi la coque de support lombaire est déplacée par rapport au plan déployé par le bâti.
